**Europäisches Patentamt**

**European Patent Office**

**Office européen des brevets**

(11) Veröffentlichungsnummer: **0 247 490**
**B1**

(12) **EUROPÄISCHE PATENTSCHRIFT**

(45) Veröffentlichungstag der Patentschrift: **07.11.90**

(21) Anmeldenummer: **87107190.8**

(22) Anmeldetag: **18.05.87**

(51) Int. Cl.⁵: **C 07 C 301/00,**
**C 07 C 303/20, C 14 C 9/02**

(54) **Sulfitierte Fettstoffe.**

(30) Priorität: **26.05.86 DE 3617691**

(43) Veröffentlichungstag der Anmeldung:
**02.12.87 Patentblatt 87/49**

(45) Bekanntmachung des Hinweises auf die
Patenterteilung:
**07.11.90 Patentblatt 90/45**

(84) Benannte Vertragsstaaten:
**CH DE ES FR GB IT LI NL**

(56) Entgegenhaltungen:
**EP-A-0 130 753**
**DD-A- 220 338**
**DE-A-1 593 108**
**DE-A-3 437 443**
**DE-B-1 016 700**

(73) Patentinhaber: **Henkel Kommanditgesellschaft
auf Aktien
Postfach 1100 Henkelstrasse 67
D-4000 Düsseldorf-Holthausen (DE)**

(72) Erfinder: **Friese, Hans-Herbert, Dr.
Schiesshecke 53
D-4019 Monheim (DE)**
Erfinder: **Pieper, Friedrich
Zehntenweg 10
D-4018 Langenfeld-Richrath (DE)**
Erfinder: **Bosse, Reinhard
Jakob-Kneip-Strasse 122
D-4000 Düsseldorf 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# EP 0 247 490 B1

**Beschreibung**

Die Erfindung betrifft sulfitierte Fettstoffe, hergestellt aus schwer sulfitierbaren Fettstoffen mit Jodzahlen kleiner 100, deren Verwendung als Fettungsmittel für Leder und Pelze sowie ein Verfahren zur Sulfitierung von Fettstoffen mit Jodzahlen kleiner 100.

Sulfitierte Fettstoffe, die als Fettungsmittel für Leder und Pelze verwendet werden, werden durch Oxidation von Fettstoffen mit sauerstoffhaltigen Gasgemischen, beispielsweise Luft, und gleichzeitiger oder anschließender Sulfitierung mit Alkali- und/oder Ammoniumhydrogensulfit hergestellt. Damit Fettstoffe überhaupt sulfitiert werden können, ist es unbedingt erforderlich, die Fettstoffe vor oder während der Sulfitierung durch Einleiten von sauerstoffhaltigen Gasgemischen zu oxidieren. Da jedoch die Oxidierbarkeit der Fettstoffe mit sinkender Jodzahl abnimmt, werden üblicherweise stärker ungesättigte Fette und Öle, d.h. solche mit Jodzahlen größer etwa 100, vorzugsweise größer etwa 130, eingesetzt (siehe zum Beispiel in "Rauchwarenherstellung und Pelzkonfektion", VEB Fachbuchverlag Leipzig 1970, Seite 116).

Sulfitierte Fettstoffe, hergestellt aus hochjodigen Seetierölen, beispielsweise Waltran oder Fischöl, oder hochjodigen Pflanzenölen, beispielsweise Sojaöl, bilden in Wasser gut emulgierbare Substanzen mit hoher Emulsionsbeständigkeit, die für die Leder- und Pelzfettung besonders geeignet sind. Werden dagegen schwer sulfitierbare Fettstoffe mit Jodzahlen kleiner 100, beispielsweise Spermöl, der oxidierenden Sulfitierung unterworfen, nimmt die Oxidationsgeschwindigkeit der Fettstoffe drastisch ab, und es resultieren in Wasser schlecht emulgierbare Produkte mit geringer Emulsionsbeständigkeit. Um diese Sulfitierungsprodukte dennoch für die Leder- und Pelzfettung verwendung zu können, müssen diese mit Emulgatoren vermischt werden oder mit wasseremulgierbaren Fettstoffen, die in der Lage sind, die schlecht emulgierbaren Sulfitierungsprodukte mit zu emulgieren.

Die Aufgabe der Erfindung bestand daher in der Bereitstellung sulfitierter Fettstoffe, hergestellt aus schwer sulfitierbaren Fettstoffen mit Jodzahlen kleiner 100, die in Wasser gut emulgierbare Produkte mit hoher Emulsionsbeständigkeit bilden und für die Leder- und Pelzfettung geeignet sind.

Überraschenderweise wurde non gefunden, daß schwer sulfitierbare Fettstoffe mit Jodzahlen kleiner 100, beispielsweise Kokosöl, Palmkernöl, Palmöl, Talge, Schweinefett, Klauenöl, Spermöl, Walrat, Triolein, Ölsäure, Wachsester, Fettsäuremonoglyceride, Fettsäurediglyceride und/oder Fettsäuretriglyceride, in Wasser gut emulgierbare Sulfitierungsprodukte mit guter Emulsionsbeständigkeit bilden, wenn sie vor der oxidierenden Sulfiltierung mit Fettsäureestern mit Jodzahlen zwischen 60 und 100 vermischt werden, wobei das Gewichtsverhältnis Fettstoff:Ester zwischen 9:1 und 1:4 liegt. Geeignete Fettsäureester haben im Fettsäurerest, der natürlichen und/oder synthetischen Ursprungs ist und gerad- oder verzweigtkettig sein kann, 12 bis 24 Kohlenstoffatome und im einwertigen Alkoholrest 1 bis 5 Kohlenstoffatome. Fettsäureester mit ungesättigten Fettsäuresten können alleine oder in Kombination mit Fettsäureestern mit gesättigten Fettsäureresten eingesetzt werden.

Gegenstand der Erfindung sind daher sulfitierte Fettstoffe, hergestellt durch Oxidation von Fettstoffen mit sauerstoffhaltigen Gasgemischen und gleichzeitiger oder anschließender Sulfitierung unter Verwendung von Alkali- und/oder Ammoniumhydrogensulfiten dadurch gekennzeichnet, daß als Fettstoffe Gemische, enthaltend

A) Fettstoffe mit Jodzahlen kleiner 100 und

B) Fettsäureester mit Jodzahlen zwischen 60 und 100 mit 12 bis 24 Kohlenstoffatomen im gerad- oder verzweigtkettigen, natürlichen und/oder synthetischen Fettsäurerest und 1 bis 5 Kohlenstoffatomen im einwertigen Alkoholrest

eingesetzt werden, wobei das Gewichtsverhältnis A:B zwischen 9:1 und 1:4 liegt.

Schwer sulfitierbare Fettstoffe mit Jodzahlen kleiner 100, vorzugzweise mit Jodzahlen im Bereich von 7 bis 95, werden vorzugsweise mit Fettsäureestern mit Jodzahlen zwischen 60 und 100 im Gewichtsverhältnis Fettstoff:Fettsäureester zwischen 4:1 und 2:3 vermischt.

Zu den schwer sulfitierbaren Fettstoffen mit Jodzahlen kleiner 100 gehören beispielsweise Fette und Öle mit einem Anteil an ungesättigten Fettsäuren und/oder Fettsäureestern, natürliche und/oder synthetisch hergestellte ungesättigte Fettsäuren mit 12 bis 24 Kohlenstoff- atomen, gewünschtenfalls in Kombination mit natürlichen und/oder synthetisch hergestellten gesättigten Fettsäuren mit 12 bis 24 Kohlenstoffatomen, natürliche und/oder synthetisch hergestellte ungesättigte Fettsäureester mit 12 bis 24 Kohlenstoffatomen sowohl im Fettsäure- als auch im Alkoholrest, gewünschtenfalls in Kombination mit den analogen natürlichen und/oder synthetisch hergestellten gesättigten Fettsäureestern, synthetische Fettsäuremonoglyceride, hergestellt aus ungesättigten Fettsäuren mit 12 bis 24 Kohlenstoffatomen, gewünschtenfalls in Kombination mit den analogen gesättigten, synthetischen Fettsäuremonoglyceriden, synthetische Fettsäuredi- und -triglyceride, hergestellt aus ungesättigten oder ungesättigten/gesättigten Fettsäuren mit 12 bis 24 Kohlenstoffatomen sowie Mischungen der aufgeführten Fettstoffgruppen. Zu den bevorzugten schwer sulfitierbaren Fettstoffen mit Jodzahlen kleiner 100, vorzugzweise mit Jodzahlen zwischen 7 und 95, gehören Kokosöl, Palmkernöl, Palmöl, Talge, Schweinefett, Klauenöl, Spermöl, Walrat, Triolein, Ölsäure, Wachsester, Fettsäuremonoglyceride, Fettsäurediglyceride, Fettsäuretriglyceride sowie deren Mischungen.

Vorzugsweise werden die schwer sulfitierbaren Fettstoffe mit Jodzahlen kleiner 100, vorzugsweise mit Jodzahlen zwischen 7 und 95 mit Fettsäureestern mit Jodzahlen zwischen 70 und 85 vermischt. Es könne

2

sowohl ungesättigte Fettsäureester als auch Gemische aus ungesättigten und gesättigten Fettsäureestern mit Jodzahlen zwischen 60 und 100, vorzugsweise zwischen 70 und 85, eingesetzt werden.

Geeignete Fettsäureester mit Jodzahlen zwischen 60 und 100, vorzugsweise zwischen 70 und 85, besitzen 12 bis 24, vorzugsweise 12 bis 18 und besonders bevorzugt 16 bis 18 Kohlenstoffatome im Fettsäurerest und 1 bis 5 Kohlenstoffatome im einwertigen Alkoholrest. Der Fettsäurerest kann gerad- oder verzweigtkettig sein. Fettsäuremethyl-, -ethyl-, -isopropyl- und/oder -isobutylester werden als Fettsäureester bevorzugt eingesetzt.

Fettstoffgemische, enthaltend schwer sulfitierbare Fettstoffe mit Jodzahlen kleiner 100, vorzugsweise mit Jodzahlen zwischen 7 und 95, und Fettsäureester mit Jodzahlen zwischen 60 und 100, vorzugsweise zwischen 70 und 85, werden bei 7 bis 110°C, vorzugsweise bei 85 bis 95°C mit 0,5 bis 2,5 Mol Alkali- und/oder Ammoniumhydrogensulfiten oder Alkali- und/oder Ammoniumhydrogensulfiten und Alkali- und/oder Ammoniumsulfiten in Form wäßriger Lösungen oder Suspensionen, vorzugsweise in Form gesättigter, wäßriger Lösungen sulfitiert.

Gegenstand der Erfindung ist ferner die Verwendung der erfindungsgemäßen sulfitierten Fettstoffe, gewünschtenfalls in Kombination mit anderen, an sich bekannten Fettungsmitteln und/oder mit anionischen und/oder nichtionischen Emulgatoren, als Fettungsmittel für Leder und Pelze.

Geeignete Fettungsmittel, die gemeinsam mit den erfindungsgemäßen sulfitierten Fettstoffen eingesetzt werden könne, sind beispielsweise sulfatierte, sulfonierte, aus hochjodigen Fettstoffen hergestellte sulfitierte, sulfochlorierte oder phosphatierte Fettstoffe, Neutralöle sowie deren Mischungen.

Geeignete anionische und/oder nichtionische Emulgagoren sind beispielsweise Alkylenoxidaddukte von Fettalkoholen, Fettsäuren, Fettsäureamiden, Fettaminen und/oder Alkylphenolen sowie deren Schwefelsäure- und/oder Phosphorsäureester, Fettalkoholsulfate, Alkylsulfate und/oder Alkylbenzolsulfonate.

Fettungsmittel mit einem Gehalt an erfindungsgemäßen sulfitierten Fettstoffen werden in Mengen von 1 bis 20 Gew.-%, bezogen auf Blößen- oder Falzgewicht, vorzugsweise in Mengen von 1 bis 2 Gew.-% während der Chromgerbung und von 4 bis 16 Gew.-% während der Hauptfettung, bzw. in Abhängigkeit von der Leder- oder Pelzart in Konzentrationen von 2 bis 10 g/l Flotte, vorzugsweise von 5 bis 7 g/l Flotte, eingesetzt. In Fettungsmitteln, die sich aus mehreren Fettungsmitteln und gegebenenfalls Emulgatoren zusammensetzen, liegt der Gehalt an erfindungsgemäßen sulfitierten Fettstoffen zwischen 10 und 95 Gew.-%.

Die Fettungstemperatur liegt zwischen 20 und 75°C, vorzugsweise zwischen 35 und 50°C.

Ein weiterer Gegenstand der Erfindung ist ein Verfahren zur Sulfitierung von Fettstoffen mit Jodzahlen kleiner 100, dadurch gekennzeichnet, daß A) Fettstoffe mit Jodzahlen kleiner 100 mit B) Fettsäureestern mit Jodzahlen zwischen 60 und 100 mit 12 bis 24 Kohlenstoffatomen im gerad- oder verzweigtkettigen, natürlichen und/oder synthetischen Fettsäurerest und 1 bis 5 Kohlenstoffatomen im einwertigen Alkoholrest, gemischt werden, wobei das Gewichtsverhältnis A:B zwischen 9:1 und 1:4 liegt und diese Fettstoffgemische in an sich bekannter Weise mit sauerstoffhaltigen Gasgemischen oxidiert und anschließend, gewünschtenfalls unter weiterem Durchleiten sauerstoffhaltiger Gasgemische unter Verwendung von Alkali- und/oder Ammoniumhydrogensulfiten sulfitiert werden.

Vorzugsweise werden Fettstoffgemische sulfitiert, die Fettstoffe mit Jodzahlen kleiner 100, vorzugsweise mit Jodzahlen zwischen 7 und 95 und Fettsäureester mit Jodzahlen zwischen 60 und 100 im Gewichtsverhältnis zwischen 4:1 und 2:3 enthalten.

Zu den schwer sulfitierbaren Fettstoffen mit Jodzahlen kleiner 100, die sich als Edukte für das erfindungsgemäße Verfahren zur Sulfitierung von Fettstoffen mit Jodzahlen kleiner 100 eignen, gehöhren Fette und Öle mit einem Anteil an ungesätigten Fettsäuren und/oder Fettsäureestern, natürliche und/oder synthetisch hergestellte ungesättigte Fettsäuren mit 12 bis 24 Kohlenstoffatomen, gewünschtenfalls in Kombination mit natürlichen und/oder synthetisch hergestellten gesättigten Fettsäuren mit 12 bis 24 Kohlenstoffatomen, natürliche und/oder synthetisch hergestellte ungesättigte Fettsäureester mit 12 bis 24 Kohlenstoffatomen sowohl im Fettsäure- als auch im Alkoholrest, gewünschtenfalls in Kombination mit den analogen natürlichen und/oder synthetisch hergestellten gesättigten Fettsäureestern, synthetische Fettsäuremonoglyceride, hergestellt aus ungesättigten Fettsäuren mit 12 bis 24 Kohlenstoffatomen, gewünschtenfalls in Kombination mit den analogen gesättigten, synthetischen Fettsäuremonoglyceriden, synthetische Fettsäuredi- und -triglyceride, hergestellt aus ungesättigten oder ungesättigten/gesättigten Fettsäuren mit 12 bis 24 Kohlenstoffatomen sowie Mischungen der aufgeführten Fettstoffgruppen. Zu den bevorzugt eingesetzten Fettstoffen mit Jodzahlen kleiner 100, vorzugsweise mit Jodzahlen zwischen 7 und 95 gehöhren Kokosöl, Palmkernöl, Palmöl, Talge, Schweinefett, Klauenöl, Spermöl, Walrat, Triolein, Ölsäure, Wachsester, Fettsäuremonoglyceride, Fettsäurediglyceride, Fettsäuretriglyceride sowie deren Mischungen.

Erfindungsgemäß werden die schwer sulfitierbaren Fettstoffe mit Jodzahlen kleiner 100, vorzugsweise mit Jodzahlen zwischen 7 und 95 vor der oxidierenden Sulfitierung mit Fettsäureestern mit Jodzahlen zwischen 60 und 100, vorzugsweise zwischen 70 und 85, im Gewichtsverhältnis Fettstoff:Fettsäureester zwischen 9:1 und 1:4, vorzugsweise zwischen 4:1 und 2:3 vermischt. Geeignete Fettsäureester mit Jodzhalen zwischen 60 und 100, vorzugsweise zwischen 70 und 85, besitzen 12 bis 24, vorzugsweise 12 bis 18 und besonders bevorzugt 16 bis 18 Kohlenstoffatome im Fettsäurerest und 1 bis 5 Kohlenstoffatome im einwertigen Alkoholrest. Der Fettsäurerest kann gerad- oder verzweigtkettig sein. Es können sowohl ungesättigte Fettsäureester als auch Gemische aus gesättigten und ungesättigten Fettsäureestern eingesetzt werden. Die Fettsäureester können nach verschiedenen Methoden hergstellt werden, beispielsweise durch Umesterung von Fetten und Ölen mit einwertigen Alkoholen mit 1 bis 5 Kohlenstoffatomen oder durch Veresterung von Fettsäuren natürlichen und/oder synthetischen Ursprungs mit einwertigen Alkoholen mit 1 bis 5 Kohlenstoffatomen. Bevorzugt werden zur Herstellung von Fettsäureestern Methanol, Ethanol, Isopropanol und/oder Isobutanol als Alkoholkomponenten eingesetzt.

Nach dem erfindungsgemäßen Verfahren zur Sulfitierung von Fettstoffen mit Jodzahlen kleiner 100 werden die Fettstoffgemische bei 70 bis 200°C, vorzugsweise bei 80 bis 120°C, oxidiert, indem ein sauerstoffhaltiges Gasgemisch durch die Fettstoffe geleitet wird, und anschließend, gegebenenfalls unter weiterem Durchleiten sauerstoffhaltiger Gasgemische, bei 70 bis 110°C, vorzugsweise bei 85 bis 95°C, mit 0,5 bis 2,5 Mol Alkali- und/oder Ammoniumhydrogensulfiten oder Alkali- und/oder Ammoniumhydrogensulfiten und Alkali- und/oder Ammoniumsulfiten/kg eingesetztem Fettstoffgemisch, in Form einer wäßrigen Lösung oder Suspension, vorzugsweise in Form einer gesättigten, wäßrigen Lösung, sulfitiert. Vorzugsweise wird die Sulfitierung mit 0,5 bis 2 Mol Alkali- und/oder Ammoniumhydrogensulfiten oder in Mischung mit Alkali- und/oder Ammoniumsulfiten/kg eingesetztem Fettstoffgemisch durchgeführt.

Die Sulfitierungsmittel werden mit den oxidierten Fettstoffgemischen vermischt, in dem das Sulfitierungsmittel in Form einer wäßrigen Lösung oder Suspension, vorzugsweise in Form einer gesättigten, wäßrigen Lösung, zu dem oxidierten Fettstoffgemisch gegeben wird oder das oxidierte Fettstoffgemisch in die wäßrige Lösung oder Suspension, vorzugsweise in die gesättigte, wäßrige Lösung des Sulfitierungsmittels eingerührt wird.

Die erfindungsgemäßen sulfitierten Fettstoffe zeichnen sich durch eine hohe Wasseremulgierbarkeit mit ausgezeichneter Emulsionsbeständigkeit aus. Sie eignen sich daher besonders gut für die Fettung von Ledern und Pelzen.

Gegenüber Sulfitierungsprodukten, hergestellt aus hochjodigen Fettstoffen, beispielsweise Fischöl, zeigen die erfindungsgemäßen Sulfitierungsprodukte eine deutlich bessere Lichtbeständigkeit. So beträgt die Lichtechtheit von Ledern—gemessen nach DIN 54 004—, die mit Fischölsulfit gefettet wurden, Stufe 1 der 8-stufigen Baumwollblauskala, während Leder, die mit den erfindungsgemäßen sulfitierten Fettstoffen behandelt wurden, die Stufe 4 oder 5 erreichen. Dabei bedeutet Stufe 1 sehr geringe Lichtbeständigkeit, Stufe 8 sehr hohe Lichtbeständigkeit.

Beispiele

JZ=Jodzahl, AS=Aktivsubstanz, Min.=Minuten, Std.=Stunden
Sofern nichts anderes angegeben ist, bedeutet "%" "Gew-%" und "g/l" "g/l Flotte".

Beispiel 1

600 g Talg (JZ=52) wurden mit 400 g $C_{16/18}$-Fettsäuremethylester (JZ=80) gemischt und bei 90°C unter Durchleiten von Luft oxidiert und anschließend bei 95°C mit 1,5 Mol Natriumhydrogensulfit pro kg eingesetztem Fettstoffgemisch in Form einer wäßrigen, 40 Gew.-% enthaltenden Natriumhydrogensulfitlösung sulfitiert. Nach beendeter Sulfitierung wurde auf Raumtemperatur gekühlt.

Beispiel 2

500 g Palmkernöl (JZ=17) wurden mit 500 g $C_{16/18}$-Fettsäuremethylester (JZ=80) gemischt, bei 110°C unter Durchleiten von Luft oxidiert und anschließend bei 95°C mit einer Mischung, enthaltend 1,2 Mol Natriumhydrogensulfit und 0,6 Mol Natriumsulfit/kg eingesetztem Fettstoffgemisch in Form einer gesättigten, wäßrigen Lösung sulfitiert. Nach beendeter Sulfitierung wurde auf Raumtemperatur gekühlt.

Beispiel 3

700 g filtriertes Schweinefett (JZ=87) wurden mit 300 g $C_{12/18}$-Fettsäuremethylester (JZ=78) gemischt, bei 85°C unter Durchleiten von Luft oxidiert und anschließend bei 90°C mit 1,3 Mol Natriumhydrogensulfit/ kg eingesetzter Fettstoffmischung in Form einer wäßrigen, 40 Gew.-% enthaltenden Natriumhydrogensulfitlösung sulfitiert. Nach beendeter Sulfitierung wurde auf Raumtemperatur gekühlt.

Beispiel 4

Analog Beispiel 1 wurde ein Gemisch, bestehend aus 550 g Triolein (JZ=92) und 450 g $C_{16/18}$-Fettsäuremethylester (JZ=88), der oxidierenden Sulfitierung unterworfen.

Beispiel 5

Analog Beispiel 2 wurde ein Mischung, bestehend aus 500 g technischer Ölsäure (JZ=85) und 500 g $C_{16/18}$-Fettsäureisopropylester (JZ=80), der oxidierenden Sulfitierung unterworfen.

Beispiel 6

600 g technisches Oleyloleat (JZ=91) wurden mit 400 g $C_{16/18}$-Fettsäuremethylester (JZ=85) gemischt, bei 120°C unter Durchleiten von Luft oxidiert und anschließend bei 90°C mit 2,0 Mol Natriumhydrogensulfit/ kg eingesetzter Fettstoffmischung in Form einer wäßrigen, 40 Gew.-% enthaltenden

4

EP 0 247 490 B1

Natriumhydrogensulfitlösung sulfitiert. Nach beendeter Sulfitierung wurde auf Raumtemperatur gekühlt.

Beispiel 7

Analog Beispiel 2 wurde ein Mischung, bestehend aus 700 g Klauenöl (JZ=85) und 300 g $C_{16/18}$-Fettsäuremethylester (JZ=80), der oxidierenden Sulfitierung unterworfen.

Beispiel 8

Chromgegerbte Leder wurden mit 7 Gew.-% AS, bezogen auf Falzgewicht, an sulfitierten Fettstoffgemischen der Beispiele 1 bis 7 sowie mit sulfitiertem Fischöl, hergestellt aus Fischöl (JZ=135) durch Oxidation mit Luft bie 90°C und Sulfitierung bei 95°C mit 1,5 Mol Natriumhydrogensulfit/kg Fischöl in Form einer wäßrigen, 40 Gew.-%igen Natriumhydrogensulfitlösung, gefettet. Nach üblicher Fertigstellung wurden die Leder gemäß DIN 54 004 auf ihre Lichtechtheit geprüft. Je höher die Lichtbeständigkeit der Fettungsmittel ist, um so höher ist die Stufennummer in der 8-stufigen Baumwollblauskala. Tabelle 1 enthält die Ergebnisse der einzelnen Messungen.

TABELLE 1

| Fettungsmittel | Lichtechtheit (gemessen nach DIN 54 004) |
|---|---|
| Beispiel 1 | Stufe 5 |
| Beispiel 2 | Stufe 5 |
| Beispiel 3 | |
| Beispiel 4 | |
| Beispiel 5 | Stufe 4 |
| Beispiel 6 | |
| Beispiel 7 | |
| sulfitiertes Fischöl | Stufe 1 |

Anwendungsbeispiel A

Einsatz während der Chromgerbung.
Alle Angaben bezogen auf Blößengewicht.
Rohmaterial: Blößen süddeutscher Provenienz.

Pickel:
100 % Wasser 25°C
8% Kochsalz
0,6% Ameisensäure (85%ig) 1:10 verd.       10 Min.
0,7% Schwefelsäure (98%) 1:10 verd. pH ca. 3,5       15 Min.
        3 Std.

Gerbung und Fettung:
2% AS mit
95 Gewichtsteilen Sulfitat, hergestellt aus
60% Schweinefett mit JZ 80 und
40% $C_{12-24}$-Fettsäuremethylester mit JZ 85 und       30 Min.
5 Gewichtsteilen $C_{16-18}$-Fettalkoholpolyglykolether
8% handelsüblicher Chromgerbstoff mit 25% $Cr_2O_3$,       30 Min.
33% basisch Abstumpfen mit 0,5% MgO pH 37,7—3,8       7 Std.

Falzen, Nachgerbung, Nachfettung wie üblich.

Anwendungsbeispiel B

Fettung von Oberledern.
Alle Angaben bezogen auf Falzgewicht.
Rohmaterial: Wet-blue, Rind, gefalzt auf 1,7 mm Dicke.

Waschen:
200% Wasser 40°C neue Flotte       10 Min.

Neutralisation:
100% Wasser 40°C
0,5 % Natriumformiat       30 Min.

Spülen mit Wasser von 60°C

5

Nachgerbung:
100% Wasser 60°C
0,5 % handelsüblicher Neutralisationsgerbstoff — 15 Min.
4% handelsüblicher Harzgerbstoff — 30 Min.
3% handelsüblicher synthetischer Vollgerbstoff — 40 Min.

Fettung:
3% AS Sulfitat hergestellt aus
   50% Triolein mit JZ 86 und
   50% Fettsäureisopropylester mit JZ 80
3% AS handelsübliches Fischölsulfat — 45 Min.
0,5 % AS $C_{16-18}$-Alkylsulfat
0,5 % Ameisensäure (85 %ig) 1:10 verd. — 15 Min.

   Leder auf Bock und normal fertigstellen.

Anwendungsbeispiel C
   Fettung von Bekleidungsleder.
   Alle Angaben bezogen auf Falzgewicht.
   Rohmaterial: Wet-blue, Kalb, gefalzt auf 0,8 mm Dicke.

Waschen:
200% Wasser 40°C neue Flotte — 10 Min.

Chromnachgerbung:
100% Wasser 40°C
3% handelsüblicher Chromgerbstoff mit 25% $Cr_2O_3$,
   33% basisch
3% handelsüblicher synthetischer Vollgerbstoff — 15 Min.
1,5% Natriumaluminiumsilikat

Fettung:
3% AS Sulfitat, hergestellt aus
   45% Schweinefett mit JZ 85
   45% Fettsäuremethylether mit JZ 80
   10% Glyzerinmonooleat mit JZ 75 — 45 Min.
0,2% AS Talgalkoholpolyglykolether
1% AS $C_{12-18}$-Alkylsulfat

Neutralisation:
2% Natriumhydrogencarbonat Spülen 60°C — 60 Min.

   Färbung, Nachgerbung, Nachfettung
   und Fertigstellung wie üblich.

Anwendungsbeispiel D
   Fettung von Schaffellvelour.
   Rohmaterial: gepickelte Schaffelle
   Flottenverhältnis: 1:20
   Chromgerbung: Badtemperatur 35°C

Gerbung und Fettung:
40 g/l Kochsalz
0,5 g/l AS $C_{12-18}$-Alkylsulfat
4 g/l AS Sulfitat, hergest. aus 60% techn. Oleyloleat
   mit JZ 84
40% $C_{12-24}$-Fettsäuremethylester mit JZ 72 — 30 Min.
0,5 g/l AS $C_{16-18}$-Fettalkoholpolyglykolether
4 g/l handelsüblicher Chromgerbstoff mit 25%
$Cr_2O_3$, 33% basisch — 30 Min.
   4 g/l handelsüblicher Chromgerbstoff — 30 Min.
   4 g/l handelsüblicher Chromgerbstoff — 5 Std.

   Flotte ab und zu bewegen

1 g/l Natriumhydrogencarbonat — über Nacht
1 g/l Natriumhydrogencarbonat pH 3,8—3,9 — 4 Std.

   danach auf Bock und wie üblich fertigstellen.

**Patentansprüche**

1. Sulfitierte Fettstoffe, hergestellt durch Oxidation von Fettstoffen mit sauerstoffhaltigen Gasgemischen und gleichzeitige oder anschließende Sulfitierung unter Verwendung von Alkali- und/oder Ammoniumhydrogensulfiten, dadurch gekennzeichnet, daß als Fettstoffe Gemische, enthaltend
   A) Fettstoffe mit Jodzahlen kleiner 100 und
   B) Fettsäureester mit Jodzahlen zwischen 60 und 100 mit 12 bis 24 Kohlenstoffatomen im gerad- oder verzweigkettigen, natürlichen und/oder synthetischen Fettsäurerest und 1 bis 5 Kohlenstoffatomen im einwertigen Alkoholrest ·
eingesetzt werden, wobei das Gewichtsverhältnis A:B zwischen 9:1 und 1:4 liegt.

2. Sulfitierte Fettstoffe nach Anspruch 1, dadurch gekennzeichnet, daß das Gewichtsverhältnis A:B zwischen 4:1 und 2:3 liegt.

3. Sulfitierte Fettstoffe nach den Ansprüchen 1 und 2, dadurch gekennzeichnet, daß Fettstoffe mit Jodzahlen zwischen 7 und 95 eingesetzt werden.

4. Sulfitierte Fettstoffe nach den Ansprüchen 1 bis 3, dadurch gekennzeichnet, daß als Fettstoffe Kokosöl, Palmkernöl, Palmöl, Talge, Schweinefett, Klauenöl, Spermöl, Walrat, Triolein, Ölsäure, Wachsester, Fettsäuremonoglyceride, Fettsäurediglyceride und/oder Fettsäuretriglyceride eingesetzt werden.

5. Sulfitierte Fettstoffe nach den Ansprüchen 1 bis 4, dadurch gekennzeichnet, daß Fettsäureester mit Jodzahlen zwischen 70 und 85 eingesetzt werden.

6. Sulfitierte Fettstoffe nach den Ansprüchen 1 bis 5, dadurch gekennzeichnet, daß Fettsäureester mit 12 bis 18, vorzugsweise mit 16 bis 18 Kohlenstoffatomen im Fettsäurerest eingesetzt werden.

7. Sulfitierte Fettstoffe nach den Ansprüchen 1 bis 6, dadurch gekennzeichnet, daß als Fettsäureester Fettsäuremethyl-, -ethyl-, -isopropyl- und/oder -isobutylester eingesetzt werden.

8. Sulfitierte Fettstoffe nach den Ansprüchen 1 bis 7, dadurch gekennzeichnet, daß sie durch Sulfitierung der Fettstoffgemische, enthaltend A) und B), mit 0,5 bis 2,5 Mol Alkali- und/oder Ammoniumhydrogensulfiten oder Alkali- und/oder Ammoniumhydrogensulfiten und Alkali- und/oder Ammoniumsulfiten pro kg eingesetztem Fettstoffgemisch erhalten werden.

9. Verfahren zur Sulfitierung von Fettstoffen mit Jodzahlen kleiner 100, dadurch gekennzeichnet, daß A) Fettstoffe mit Jodzahlen kleiner 100 mit B) Fettsäureestern mit Jodzahlen zwischen 60 und 100 mit 12 bis 24 Kohlenstoffatomen im gerad- oder verzweigkettigen, natürlichen und/oder synthetischen Fettsäurest und 1 bis 5 Kohlenstoffatomen im einwertigen Alkoholrest gemischt werden, wobei das Gewichtsverhältnis A:B zwischen 9:1 und 1:4 liegt und die Fettstoffgemische in an sich bekannter Weise mit sauerstoffhaltigen Gasgemischen oxidiert und anschließend, gewünschtenfalls unter weiterem Durchleiten sauerstoffhaltiger Gasgemische, unter Verwendung von Alkali- und/oder Ammoniumhydrogensulfiten sulfitiert werden.

10. Verfahren nach Anspruch 9, dadurch gekennzeichnet, daß die Fettstoffgemische mit 0,5 bis 2,5 Mol Alkali- und/oder Ammoniumhydrogensulfiten oder Alkali- und/oder Ammoniumhydrogensulfiten und Alkali- und/oder Ammoniumsulfiten pro kg eingesetzten Fettstoffgemisch sulfitiert werden.

11. Verfahren nach den Ansprüchen 9 und 10, dadurch gekennzeichnet, daß das Gewichtsverhältnis A:B zwischen 4:1 und 2:3 liegt.

12. Verfahren nach den Ansprüchen 9 bis 11, dadurch gekennzeichnet, daß Fettstoffe mit Jodzahlen zwischen 7 und 95 eingesetzt werden.

13. Verfahren nach den Ansprüchen 9 bis 12, dadurch gekennzeichnet, daß als Fettstoffe Kokosöl, Palmkernöl, Palmöl, Talge, Schweinefett, Klauenöl, Spermöl, Walrat, Triolein, Ölsäure, Wachsester, Fettsäuremonoglyceride, Fettsäurediglyceride und/oder Fettsäuretriglyceride eingesetzt werden.

14. Verfahren nach den Ansprüche 9 bis 13, dadurch gekennzeichnet, daß die Fettstoffe mit Fettsäureestern mit Jodzahlen zwischen 70 und 85 gemischt werden.

15. Verfahren nach den Ansprüchen 9 bis 14, dadurch gekenneichnet, daß die Fettstoffe mit Fettsäureestern mit 12 bis 18, vorzugsweise mit 16 bis 18 Kohlenstoffatomen im Fettsäurerest gemischt werden.

16. Verfahren nach den Ansprüche 9 bis 15, dadurch gekennzeichnet, daß die Fettstoffe mit Fettsäuremethyl-, -ethyl-, -isopropyl- und/oder -isobutylester gemischt werden.

17. Verwendung sulfitierter Fettstoffe nach den Ansprüchen 1 bis 16, gewünschtenfalls in Kombination mit anderen, an sich bekannten Fettungsmitteln und/oder mit anionischen und/oder nichtionischen Emulgatoren als Fettungsmittel für Leder und Pelze.

**Revendications**

1. Matières grasses sulfitées obtenues par oxydation de matières grasses avec des mélanges gazeux contenant de l'oxygène et sulfitation simultanée ou successive par utilisation de bisulfites alcalins et/ou d'ammonium, caractérisé en ce que l'on met en oeuvre comme matières grasses, des mélanges contenant
   A) des matières grasses ayant un indice d'iode inférieur à 100
   B) des esters d'acide gras ayant un indice d'iode entre 60 et 100, avec de 12 à 24 atomes de carbone en chaîne droite ou ramifiée dans le radical acide gras naturel et/ou synthétique pour lequel le rapport pondéral A/B se situe entre 9:1 et 1:4.

2. Matières grasses sulfitées selon la revendication 1, caractérisées en ce que le rapport pondéral A/B se situe entre 4:1 et 2:3.

3. Matières grasses sulfitées selon les revendications 1 et 2, caractérisées en ce que des matières grasses ayant un indice d'iode compris entre 7 et 95, sont mises en oeuvre.

4. Matières grasses sulfitées selon les revendications 1 à 3, caractérisé en ce que comme matière grasse on met en oeuvre de l'huile de coco, de l'huile de palmiste, de l'huile de palme, des suifs, de la graisse de porc, de l'huile de griffes, de la graisse de cachalot, de la graisse de baleine, de la trioléine, de l'acide oléique, un ester de cire, des monoglycérides d'acide gras, des diglycérides d'acide gras, et/ou des triglycérides d'acide gras.

5. Matières grasses sulfitées selon les revendications 1 à 4, caractérisées en ce que des esters d'acide gras ayant un indice d'iode compris entre 70 et 85 sont mis en oeuvre.

6. Matières grasses sulfitées selon les revendications 1 à 5, caractérisées en ce que l'on met en oeuvre des esters d'acide gras ayant de 12 à 18, de préférence de 16 à 18 atomes de carbone, dans la partie acide gras.

7. Matières grasses sulfitées selon les revendications 1 à 6, caractérisées en ce que comme ester d'acide gras, on met en oeuvre des esters méthylique, éthylique, isopropylique, et/ou isobutylique d'acide gras.

8. Matières grasses sulfitées selon les revendications 1 à 7, caractérisées en ce qu'elles sont obtenues par sulfitation de mélanges de matières grasses contenant A) et B) avec 0,5 à 2,5 mole de bisulfites alcalins et/ou d'ammonium ou des bisulfites alcalins et/ou d'ammonium et des sulfites alcalins et/ou d'ammonium par Kg de mélange de matière grasse mis en oeuvre.

9. Procédé de sulfitation de matières grasses ayant un indice d'iode inférieur à 100, caractérisé en ce que l'on mélange.

A) des matières grasses dont l'indice d'iode est inférieure à 100,

B) des esters d'acides gras dont l'indice d'iode est compris entre 60 et 100, avec 12 à 24 atomes de carbone en chaîne droite ou ramifiée, dans la partie acide gras naturel et/ou synthétique, et de 1 à 5 atomes de carbone dans le radical alcool monovalent pour lequel le rapport pondéral A/B se situe entre 9:1 et 1:4 et que l'on oxyde le mélange de matière grasse d'une matière connue en soi avec des mélanges gazeux contenant de l'oxygène, et ensuite, si désiré, sous barbotage supplémentaire de mélange gazeux contenant de l'oxygène, on les sulfite en utilisant des bisulfites alcalins et/ou d'ammonium.

10. Procédé selon la revendication 9, caractérisé en ce que les mélanges de matières grasses sont sulfités avec 0,5 à 2,5 mol de bisulfites alcalins et/ou d'ammonium ou de bisulfites alcalins et/ou d'ammonium et de sulfites alcalins et/ou d'ammonium par Kg de mélange de matière grasse mis en jeu.

11. Procédé selon les revendications 9 et 10, caractérisé en ce que le rapport pondéral A/B se situe entre 4:1 et 2:3.

12. Procédé selon les revendications 9 à 11, caractérisé en ce que des matières grasses ayant un indice d'iode compris entre 7 et 95 sont mises en oeuvre.

13. Procédé selon les revendications 9 à 12, caractérisé en ce que l'on met en oeuvre comme matières grasses, l'huile de coco, l'huile de palmiste, l'huile de palme, les suifs, la graisse de porc, l'huile de griffes, la graisse de cachalot, la graisse de baleine, la trioléine, l'acide oléique, les esters de cires, le monoglycérides d'acide gras, les diglycérides d'acide gras et/ou les triglycérides d'acide gras.

14. Procédé selon les revendications 9 à 13, caractérisé en ce que les matières grasses sont mélangées avec des esters d'acide gras, ayant un indice d'iode compris entre 70 et 85.

15. Procédé selon les revendications 9 à 14, caractérisé en ce que les matières grasses sont mélangées avec des esters d'acide gras ayant de 12 à 18, de préférence de 16 à 18 atomes de carbone dans le radical acide gras.

16. Procédé selon les revendications 9 à 15, caractérisé en ce que les matières grasses sont mélangées avec un ester méthylique, éthylique, isopropylique et/ou isobutylique d'acide gras.

17. Utilisation de matières grasses sulfitées selon les revendications 1 à 16, si désiré en combinaison avec d'autres agents de graissage connus en soi et/ou avec des émulsionnants anioniques et/ou non-ioniques comme agent de graissage pour cuirs et peaux.

## Claims

1. Sulfited fats prepared by oxidation of fats with oxygen-containing gas mixtures and simultaneous or subsequent sulfitation using alkali and/or ammonium hydrogen sulfites, characterized in that the fats used are mixtures containing

A) fats having iodine values below 100 and

B) fatty acid esters having iodine values of from 60 to 100 and containing from 12 to 24 carbon atoms in the linear or branched, natural and/or synthetic fatty acid component and from 1 to 5 carbon atoms in the monohydric component,

the ratio by weight of A) to B) being from 9:1 to 1:4.

2. Sulfited fats as claimed in Claim 1, characterized in that the ratio by weight of A) to B) is from 4:1 to 2:3.

3. Sulfited fats as claimed in Claims 1 and 2, characterized in that fats having iodine values of from 7 to 95 are used.

4. Sulfited fats as claimed in Claims 1 to 3, characterized in that coconut oil, palm kernel oil, palm oil, tallows, lard, neat's-foot oil, sperm oil, whale oil, triolein, oleic acid, wax esters, fatty acid monoglycerides, fatty acid diglycerides and/or fatty acid triglycerides are used as fats.

5. Sulfited fats as claimed in Claims 1 to 4, characterized in that fatty acid esters having iodine values of from 70 to 85 are used.

6. Sulfited fats as claimed in Claims 1 to 5, characterized in that fatty acid esters containing from 12 to 18 and preferably from 16 to 18 carbon atoms in the fatty acid component are used.

7. Sulfited fats as claimed in Claims 1 to 6, characterized in that fatty acid methyl, ethyl, isopropyl and/or isobutyl ester are used as the fatty acid esters.

8. Sulfited fats as claimed in Claims 1 to 7, characterized in that they are obtained by sulfitation of the fat mixtures containing A) and B) with 0.5 to 2.5 mol alkali and/or ammonium hydrogen sulfites or alkali and/or ammonium hydrogen sulfites and alkali and/or ammonium sulfites per kg fat mixture used.

9. A process for the sulfitation of fats having iodine values below 100, characterized in that A) fats having iodine values below 100 are mixed with B) fatty acid esters having iodine values of from 60 to 100 and containing from 12 to 24 carbon atoms in the linear or branched, natural and/or synthetic fatty acid component and from 1 to 5 carbon atoms in the monohydric alcohol component, the ratio by weight of A) to B) being from 9:1 to 1:4, and the fat mixtures are oxidized in known manner with oxygen-containing gas mixtures and are then sulfited using alkali and/or ammonium hydrogen sulfites, if desired while more oxygen-containing gas mixture is passed through.

10. A process as claimed in Claim 9, characterized in that the fat mixtures are sulfited with 0.5 to 2.5 mol alkali and/or ammonium hydrogen sulfites or alkali and/or ammonium hydrogen sulfites and alkali and/or ammonium sulfites per kg fat mixture used.

11. A process as claimed in Claims 9 and 10, characterized in that the ratio by weight of A) to B) is from 4:1 to 2:3.

12. A process as claimed in Claims 9 to 11, characterized in that fats having iodine values of from 7 to 95 are used.

13. A process as claimed in Claims 9 to 12, characterized in that coconut oil, palm kernel oil, palm oil, tallows, lard, neat's-foot oil, sperm oil, whale oil, triolein, oleic acid, wax esters, fatty acid monoglycerides, fatty acid diglycerides and/or fatty acid triglycerides are used as fats.

14. A process as claimed in Claims 9 to 13, characterized in that the fats are mixed with fatty acid esters having iodine values of from 70 to 85.

15. A process as claimed in Claims 9 to 14, characterized in that the fats are mixed with fatty acid esters containing from 12 to 18 and preferably from 16 to 18 carbon atoms in the fatty acid component.

16. A process as claimed in Claims 9 to 15, characterized in that the fats are mixed with fatty acid methyl, ethyl, isopropyl and/or isobutyl ester.

17. The use of the sulfited fats claimed in Claims 1 to 16, if desired in combination with other fat liquoring agents known *per se* and/or with anionic and/or nonionic emulsifiers, as fat liquoring agents for leather and skins.